(19) Europäisches Patentamt
European Patent Office
Office européen des brevets

(11) **EP 2 066 543 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(21) Anmeldenummer: **07787907.0**

(22) Anmeldetag: **25.07.2007**

(51) Int Cl.:
**B60W 20/00** *(2006.01)*   **B60W 10/08** *(2006.01)*
**B60W 10/26** *(2006.01)*

(86) Internationale Anmeldenummer:
**PCT/EP2007/057681**

(87) Internationale Veröffentlichungsnummer:
**WO 2008/034661 (27.03.2008 Gazette 2008/13)**

(54) **Verfahren zum Betreiben eines Hybridantriebs eines Kraftfahrzeugs**

Method for operating a hybrid drive of a vehicle

Procédé d'entraînement d'une propulsion hybride de véhicule automobile

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.09.2006 DE 102006044427**

(43) Veröffentlichungstag der Anmeldung:
**10.06.2009 Patentblatt 2009/24**

(73) Patentinhaber: **Robert Bosch GmbH**
**70442 Stuttgart (DE)**

(72) Erfinder: **FALKENSTEIN, Jens-Werner**
**73434 Aalen (DE)**

(56) Entgegenhaltungen:
WO-A-97/08008    DE-A1- 10 261 278
DE-A1-102004 048 606    GB-A- 2 353 984

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren nach dem Oberbegriff des Anspruchs 1 zum Betreiben eines Hybridantriebs eines Kraftfahrzeugs, der einen Verbrennungsmotor, mindestens eine elektrische Maschine und mindestens einen elektrischen Speicher aufweist, wobei die elektrische Maschine und der elektrische Speicher einem Bordnetz des Kraftfahrzeugs angehören.

## Stand der Technik

Ein derartiges Verfahren zum Betreiben eines Hybridantriebs eines Kraftfahrzeugs ist aus der DE 10 2004 048 606 A1 bekannt. Dabei ist der Hybridantrieb insbesondere als Parallelhybrid ausgeführt, bei dem ein Antriebsstrang des Kraftfahrzeugs aus einem Verbrennungsmotor und einer elektrischen Maschine besteht. Diese sind fest oder über eine schaltbare Trennkupplung miteinander verbunden. Ist eine Trennkupplung vorhanden, ermöglicht der Antriebsstrang neben den Betriebsarten eines hybridischen Fahrens, einem Boostbetrieb und einem Rekuperationsbetrieb auch ein rein elektrisches Fahren. Eine weitere Aufgabe der mindestens einen elektrischen Maschine ist, einen elektrischen Speicher und ein elektrisches Bordnetz des Kraftfahrzeugs mit der erforderlichen elektrische Energie zu versorgen. Bei hohen Momentanforderungen durch den Fahrer wird der Verbrennungsmotor von der elektrischen Maschine unterstützt. Dieser so genannte Boostbetrieb ist nur temporär (mittelfristig) möglich, da dem elektrischen Energiespeicher dabei Energie entnommen wird. Daneben ermöglich die elektrische Maschine einen Rekuperationsbetrieb, bei dem während einer Verzögerung des Fahrzeugs kinetische Energie durch generatorischen Betrieb der elektrischen Maschine in elektrische Energie umgewandelt wird. Daneben wird die elektrische Maschine dazu genutzt, ein verzögertes Ansprechen des Verbrennungsmotors auf einer Momentanforderung zu kompensieren. Ein verzögertes Ansprechen erfolgt zum Beispiel bei dem sogenannten Turboloch oder durch die begrenzte Dynamik des Luftpfades des Verbrennungsmotors. Verbrennungsmotoren, insbesondere Otto-Motoren mit Saugrohreinspritzung, besitzen meist eine elektronische Drosselklappe zur Luftmassenstromregulierung. Das Fahrpedal ist von dieser elektronischen Drosselklappe mechanisch entkoppelt. Die endliche Einstellgeschwindigkeit des Drosselklappenstellgliedes und dynamische Füllungseffekte im Saugrohr (Luftpfad) lassen eine hochdynamische Einstellung eines vorgegebenen Luftmassenstromes und des dadurch erzeugten Verbrennungsmotordrehmomentes nicht zu. Im Gegensatz zu dem Luftpfad kann ein Eingriff in den Zündwinkel und eine damit verbundene Reduzierung des Verbrennungsmotordrehmomentes nahezu verzögerungsfrei erfolgen. Durch eine Verstellung des Zündwinkels in Richtung eines späteren Zündzeitpunkts verschlechtert sich jedoch der Wirkungsgrad des Verbrennungsmotors, was den Kraftstoffverbrauch und die Abgasemissionen erhöht. Die Drehmomentansteuerung der elektrischen Maschine weist eine Dynamik auf, die im Vergleich zum Turboloch eines Diesel-Motors oder zur Saugrohrdynamik eines Otto-Motors sehr viel größer ist. Daher wird die elektrische Maschine im kurz- und mittelfristigen Betrieb zur Ergänzung des Verbrennungsmotors genutzt. Diese Ergänzung muss so koordiniert werden, dass der Betrieb des Bordnetzes langfristig gewährleistet ist.

Aus der WO 97/08008 ist ein Antriebssystem eines Hybridfahrzeuges bekannt, bei welchem die elektrische Maschine bremsend und antreibend (boosten) wirken kann. Aus der GB 2 353 984 ist ein Verfahren bekannt, eine elektrische Maschine so anzusteuern, dass diese ein Gesamtmoment erzeugt, welches sich aus einem ersten Moment, welches dem Antrieb des Fahrzeugs dient, und aus einem zweiten Moment, welches dem Versorgen und Aufladen des Bordnetzes dient, zusammensetzt. Aus der DE 10 2004 048 606 ist der Betrieb eines Hybridfahrzeuges mit unterschiedlichen Betriebsarten bekannt. Einer Steuereinheit werden Informationen über einzelne Komponenten eines Hybridfahrzeuges zugeführt. Auf Grundlage dieser Informationen steuert das Steuergerät die Komponenten, sodass der Fahrerwunsch, Versorgungs- und Sicherheitskriterien erfüllt werden.

## Offenbarung der Erfindung

Das erfindungsgemäße Verfahren zusätzlich weist folgende Schritte auf:

- Unterteilung des Betriebs der elektrischen Maschine in aneinandergrenzende Unterbereiche

    a) instationärer Ausgleichsbetrieb,
    b) Boost- und/oder Rekuperationsbetrieb und
    c) Bordnetz-Aufrechterhaltungsbetrieb,

- Zuweisung von Moment- und/oder Leistungsgrenzen der elektrischen Maschine in mindestens zwei Unterbereichen und
- Freigabe und/oder Beeinflussung der jeweiligen Moment- und/oder Leistungsgrenzen der Unterbereiche in Abhängigkeit von dem momentanen Zustand des elektrischen Speichers und/oder der elektrischen Maschine und/oder des Bordnetzes.

Das erfindungsgemäße Verfahren sorgt somit für eine Momentenbeziehungsweise Leistungskoordination eines Hybridantriebs, die ein Soll-Moment beziehungsweise eine Sollleistung des Hybridantriebs geeignet auf den Verbrennungsmotor und die elektrische Maschine aufteilt. Dabei wird langfristig die Versorgung des elektrischen Bordnetzes im Bordnetz-Aufrechterhaltungsbetrieb sichergestellt. Zusätzlich wird - in Abhängigkeit von dem momentanen Zustand (wie zum Beispiel Ladezustand, Temperatur, noch verbleibende Lebensdauer) des elektrischen Speichers - temporär ein Boost- und/oder Rekuperationsbetrieb, sowie ein instationärer Ausgleichsbetrieb zugelassen. Dazu wird der Betriebsbereich der elektrischen Maschine in Unterbereiche (instationärer Ausgleichsbetrieb, Boost- und/oder Rekuperationsbetrieb und Bordnetz-Aufrechterhaltungsbetrieb) aufgeteilt. Mindestens zwei Unterbereichen werden individuelle Moment- und/oder Leistungsgrenzen der elektrischen Maschine zugeordnet. Dadurch werden den einzelnen Aufgaben der elektrischen Maschine unabhängige Moment- und/oder Leistungsgrenzen gesetzt. Die Freigabe und/oder Beeinflussung der jeweiligen Moment- und/oder Leistungsgrenzen der Unterbereiche erfolgt in Abhängigkeit von dem momentanen Zustand des elektrischen Speichers. Daneben kann der Zustand der elektrischen Maschine (zum Beispiel Temperatur) und/oder der Zustand des Bordnetzes (zum Beispiel Einschalten eines Bordnetzverbrauchers) die Moment- und/oder Leistungsgrenzen beeinflussen. Oberste Priorität hat dabei die langfristige Versorgung des elektrischen Bordnetzes entsprechend einer Ladestrategie des elektrischen Speichers. In Abhängigkeit von dieser Ladestrategie werden die individuellen Moment- und/oder Leistungsgrenzen der anderen Unterbereiche freigegeben oder verwehrt und/oder beeinflusst. Durch das Verfahren wird im Boostbetrieb die Fahrdynamik erhöht und im instationären Ausgleichsbetrieb der Fahrkomfort erhöht. Alle im Weiteren auf Momente bezogenen Größen können alternativ auch auf Leistungen bezogen werden.

Weiterhin ist vorgesehen, dass der instationäre Ausgleichsbetrieb ein kurzfristiger Betrieb ist, der Boost- und/ oder Rekuperationsbetrieb ein mittelfristiger Betrieb ist und der Bordnetz-Aufrechterhaltungsbetrieb ein langfristiger Betrieb ist. Durch diese Unterteilung in kurzfristigen, mittelfristigen und langfristigen Betrieb werden charakteristische Betriebsdauern des instationären Ausgleichsbetriebs, des Boost- und/oder Rekuperationsbetriebs und des Bordnetz-Aufrechterhaltungsbetriebs festgelegt. Nach Abschluss dieser charakteristischen Betriebsdauer wird der dem Unterbereich entsprechende Betrieb beendet.

Mit Vorteil ist vorgesehen, dass der kurzfristige Betrieb maximal zwei Sekunden, der mittelfristige Betrieb maximal eine Minute und der langfristige Betrieb länger als eine Minute andauert. Der instationäre Ausgleichsbetrieb benötigt im Allgemeinen eine Betriebsdauer von maximal zwei Sekunden, da die Zeitkonstanten der Dynamik des Verbrennungsmotors - zum Beispiel der Saugrohrdynamik eines Otto-Motors - deutlich unterhalb dieser maximalen Betriebsdauer liegt. Die Begrenzung der Betriebsdauer des Boost- und/oder Rekuperationsbetriebs ergibt sich aus der zeitlichen Dauer eines üblichen Beschleunigungsvorgangs eines Kraftfahrzeugs (zum Beispiel bei einem Überholvorgang) und der vorhandenen Menge an im elektrischen Speicher gespeicherter Energie. Alternativ zu der Begrenzung des mittelfristigen Betriebs auf maximal eine Minute kann der mittelfristige Betrieb auf eine von dem Zustand des elektrischen Speichers abhängige maximale Betriebsdauer reduziert werden.

Mit Vorteil ist vorgesehen, dass ein Übergang der Moment- und/oder Leistungsgrenze auf eine niedrigere oder höhere Moment- und/oder Leistungsgrenze kontinuierlich erfolgt. Nach Abschluss der maximalen Betriebsdauer wird die Moment- und/oder Leistungsgrenze "sanft" und kontinuierlich abgeregelt. Dabei wird insbesondere ein abruptes Abregeln vermieden, da dies im instationären Ausgleichsbetrieb für Moment- und/oder Leistungssprünge sorgen würde, die der instationäre Ausgleichsbetrieb gerade vermeiden soll. Beim Boost- und/oder Rekuperationsbetrieb wird das Moment beziehungsweise die Leistung ebenfalls kontinuierlich abgeregelt, sodass vermieden wird, dass das Kraftfahrzeug in einem Überholvorgang oder einer anderen für den Boostbetrieb typischen Situation nicht plötzlich an Moment- und/oder Leistung verliert und es dadurch zu gefährlichen Verkehrssituationen kommt.

Weiterhin ist mindestens ein weiterer Unterbereich vorgesehen, wobei der elektrischen Maschine in diesem Unterbereich eine entsprechende Moment- und/oder Leistungsgrenze zugewiesen wird. Dabei wird dieser weitere Unterbereich entsprechend seiner Betriebsdauer in die Unterteilung des Betriebsbereichs eingeordnet.

Nach einer Weiterbildung der Erfindung ist vorgesehen, dass der weitere Unterbereich ein Externbetrieb ist, bei dem ein externer Eingriff auf den Hybridantrieb erfolgt. Ein entsprechender Eingriff kann zum Beispiel durch ein elektronisches Stabilitätsprogramm (ESP) oder ein Automatikgetriebe erfolgen.

Mit Vorteil ist vorgesehen, dass die Reihenfolge der Freigabe und/oder der Beeinflussung der jeweiligen Moment- und/oder Leistungsgrenzen der Unterbereiche nacheinander für Unterbereiche mit immer größeren Moment- und/ oder Leistungsgrenzen erfolgt. Dabei sind die Unterbereiche so in der Reihenfolge des Signalflusses angeordnet, dass Unterbereiche mit großen Moment- und/oder Leistungsgrenzen weiter hinten liegen als Unterbereiche mit kleineren Moment- und/oder Leistungsgrenzen. Dabei können die Moment- und/oder Leistungsgrenzen eines jeden in der Reihenfolge des Signalflusses weiter hinten liegenden Unterbereiches zusätzlich von Signalen der davor liegenden Unterbereiche abhängen.

Weiterhin ist vorgesehen, dass die Reihenfolge der Freigabe und/oder der Beeinflussung der jeweiligen Moment- und/oder Leistungsgrenzen der Unterbereiche nacheinander für Unterbereiche mit immer kürzeren Betriebszeiten erfolgt. Bevorzugt nimmt die Betriebsdauer, während denen der einzelne Unterbereich Einfluss auf die Momente nimmt, in der Reihenfolge des Signalflusses ab. Somit nehmen auch die von den einzelnen Unterbereichen und ihren entsprechenden Koordinationsstufen beeinflussten Energieumsätze in der Reihenfolge des Signalflusses ab. Dies geschieht insbesondere auch für eine Reihenfolge der Freigabe und/oder der Beeinflussung, bei der die Unterbereiche in der Reihenfolge des Signalflusses immer größere Moment- und/oder Leistungsgrenzen aufweisen. Der instationäre Ausgleichsbetrieb liegt bevorzugt im Signalfluss hinter dem Boost- und/oder Rekuperationsbetrieb. Sind die Grenzen für den Boost- und/oder Rekuperationsbetrieb zum Beispiel wegen zu geringem Energieinhalt des elektrischen Speichers bereits abgeregelt, können die Moment- und/oder Leistungsgrenzen für den instationären Ausgleichsbetrieb noch offen sein. Dies ist möglich, da bei dem (kurzfristigen) Instationärausgleich des Instationärbetriebs die umgesetzten Energien im Vergleich zum (mittelfristigen) Boost- und/oder Rekuperationsbetrieb klein sind. Damit bleibt der instationäre Ausgleichsbetrieb auch bei abgeregeltem Boost- und/oder Rekuperationsbetrieb aktiv. Für einen (kurzzeitigen) Instationärausgleich kann die elektrische Maschine im Bereich der Überlast betrieben werden, während ein (mittelfristiger) Boost-Betrieb nur die Dauerlastgrenzen nutzt. Entsprechend gestufte Grenzen - je nach Dauer der Belastung - können zum Beispiel erforderlich sein, um die Lebensdauer des elektrischen Speichers zu verbessern oder zu erhalten.

Schließlich ist vorgesehen, dass die elektrische Maschine als Generator und als elektrischer Motor des Hybridantriebs genutzt wird. Durch eine entsprechende Nutzung wird ein separater Generator zur Aufrechterhaltung des Bordnetzes und zum Aufladen des elektrischen Speichers nicht benötigt.

## Kurze Beschreibung der Zeichnungen

Die Erfindung wird anhand der Figuren näher erläutert, und zwar zeigt:

Figur 1     ein Blockschaltbild einer Simulation eines Hybridantriebs mit einer Ansteuervorrichtung zur Durchführung des erfindungsgemäßen Verfahrens,

Figur 2     die Sprungantwort des resultierenden Ist-Moments des Hybridantriebs auf einen Sprung des Soll-Moments bei freigegebenem Boost-Betrieb und

Figur 3     die Sprungantwort des resultierenden Ist-Moments des Hybridantriebs auf einen Sprung des Soll-Moments bei nicht freigegebenem Boost-Betrieb.

## Ausführungsform(en) der Erfindung

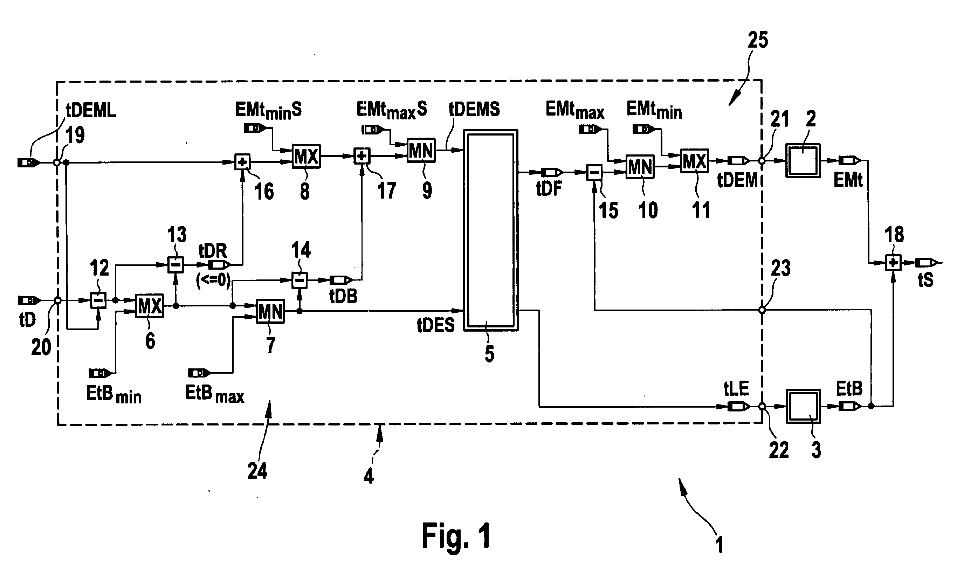

Die Figur 1 zeigt ein Blockschaltbild einer Simulation eines Hybridantriebs 1 mit zwei Antriebsmaschinen 2, 3, wobei die erste Antriebsmaschine als elektrische Maschine 2 und die zweite Antriebsmaschine als Verbrennungsmotor 3 ausgebildet ist. Die Antriebsmaschinen 2, 3 werden mittels einer koordinierenden Ansteuervorrichtung 4 mit einem Fahrkomfortfilter 5, mehreren Vergleichseinheiten 6, 7, 8, 9, 10, 11, mehreren Subtrahiereinheiten 12, 13, 14, 15 und mehreren Addiereinheiten 16, 17 koordinierend angesteuert. Die Vergleichseinheiten 6, 8, 11 vergleichen zwei Eingangswerte und geben den höheren Eingangswert als Ausgangswert aus , die Vergleichseinheiten 7, 9, 10 den niedrigeren Eingangswert. Die Ist- Momente (Verbrennungsmotor- Basismoment EtB und Elektromaschinen- Ist- Moment EMt) addieren sich über ein Getriebe 18 zu einem Abtriebsmoment (Hybridantrieb- Summenmoment) tS. Die Ansteuervorrichtung 4 weist einen Eingang 19 auf, bei dem das Signal einer Momentvorgabe der Lade- Strategie im Bordnetz-Aufrechterhaltungsbetrieb tDEML eingeht. Weiterhin weist die Ansteuervorrichtung 4 einen Eingang 20 auf, bei dem ein Signal eines Soll- Moments tD eingeht. Dieses Soll- Moment tD kann zum Beispiel von einem Fahrpedal kommen, mit dem der Fahrer des Kraftfahrzeugs ein Fahrerwunschmoment vorgibt. Am Ausgang 21 der Ansteuervorrichtung 4 gibt diese ein zum Elektromaschinen- Soll- Moment tDEM proportionales Signal an die elektrische Maschine 2 und am Ausgang 22 ein zum Verbrennungsmotor- Soll- Moment tLE proportionales Signal an den Verbrennungsmotor 3 aus. Am Eingang 23 wird ein zum Verbrennungsmotor- Basis- Moment Ein proportionale Signal in die Ansteuervorrichtung 4 zurückgeführt. Über den Eingang 20 gibt der Fahrer ein Soll- Moment tD für das Hybridantrieb- Summenmoment tS vor. Ein Zündwinkeleingriff beim Verbrennungsmotor 3 erfolgt im betrachteten Beispiel nicht, somit entspricht das Ist-Drehmoment des Verbrennungsmotors 3 den Verbrennungsmotor- Basis- Moment EtB, das bei idealem Zündwinkel erzeugt wird. Das Basismoment EtB hängt von der Luftfüllung ab und folgt dem Verbrennungsmotor- Soll- Moment tLE verzögert aufgrund der begrenzten Dynamik des Luftpfades. Das Übertragungsverhalten vom Verbrennungsmotor- Soll-Moment tLE auf das Basismoment EtB ist durch eine Reihenschaltung eines Totzeitgliedes mit einer Totzeit von 80 ms und eines PT1- Gliedes mit einer Zeitkonstante von 200 ms im Block 3 (Verbrennungsmotor) näherungsweise nachgebildet. Die Drehmomentansteuerung der elektrischen Maschine 2 erfolgt im Vergleich zum Verbrennungsmotor 3 mit hoher Dynamik. Das Übertragungsverhalten vom Elektromaschinen- Soll- Moment tDEM auf das Elektromaschinen-Ist- Moment EMt wird im Block 2 (elektrische Maschine) durch ein PT1- Glied mit einer Zeitkonstante von 20 ms näherungsweise modelliert. Das Verbrennungsmotor- Ist- Drehmoment EtB und das Elektromaschinen- Ist- Moment EMt addieren sich zum Summendrehmoment tS.

Eine Betriebs- / Ladestrategie ermittelt abhängig vom Energiebedarf des elektrischen Bordnetzes und weiterer Einflussgrößen eine Momentvorgabe eines Soll- Moments tDEML für die elektrische Maschine 2. Die Betriebs- / Ladestrategie arbeitet verbrauchsoptimal und im Hinblick auf geringe Abgasemissionen optimiert und wird hier nicht weiter beschrieben. Die Ermittlung des Soll- Moments tDEML bildet einen Teil des ersten Unterbereichs des Betriebsbereichs der elektrischen Maschine (Bordnetz- Aufrechterhaltungsbetrieb) . Dabei kann ein erster Satz von (langfristigen) Moment- und/ oder Leistungsgrenzen berücksichtigt werden. Die Moment- Vorgabe der Ladestrategie tDEML wird in einer ersten Koordinationsstufe mit umgekehrten Vorzeichen zum Soll- Moment tD des Fahrers addiert, die Summe ergibt ein Soll- Drehmoment für den Verbrennungsmotor 3. Fordert der Fahrer ein sehr hohes Soll- Moment tD des Hybridantriebs 1 an, überschreitet das so ermittelte Verbrennungsmotor- Soll- Moment das bei der aktuellen Drehzahl und bei stationärem Betrieb maximal mögliche Verbrennungsmotor- Basis- Moment $EtB_{max}$. Dabei entsteht ein Boost- Moment tDB, das einen Wert größer oder gleich Null annimmt. Über den dargestellten Querpfad wird der Elektromaschine das Boost- Moment tDB über die Addiereinheit 17 zusätzlich aufgeschaltet. Eine weitere Limitierung begrenzt die so ermittelte Moment- Vorgabe der elektrischen Maschine 2 auf die für den Boost- Betrieb (mittelfristig) gültige Momentgrenze $EMt_{max}S$. Beim Boosten wird die Momentvorgabe tDEML der Ladestrategie nicht eingehalten, da das zusätzliche Boost- Moment tDB wirkt. Der begrenzte Energieinhalt des elektrischen Energiespeichers nimmt dabei im Allgemeinen ab. Um eine zu starke Entladung zu vermeiden und eine Reproduzierbarkeit zu erreichen, ist eine Abregelung des Boostbetriebes nach Ende der Betriebszeit des Boostbetriebes vorgesehen. Die Abregelung des Boostbetriebs erfolgt, indem die für den Boostbetrieb gültige Momentgrenze $EMt_{max}S$ reduziert wird, eine vollständige Abregelung ergibt sich mit $EMt_{max}S = tDEML$.

Ein entsprechendes Vorgehen ist für die Rekuperation des Boost- und/oder Rekuperationsbetriebs vorgesehen, mit einer für die Rekuperation gültigen (mittelfristigen) Momentengrenze $EMt_{min}S$ und einem minimalen Verbrennungsmotor-Basis-Moment $EtB_{min}$, wobei sich ein Rekuperationsmoment tDR ergibt. Maßnahmen zum koordinierten Übergang in die Zündwinkelspätverstellung beziehungsweise Schubabschaltung bei negativem Verbrennungsmotor-Soll-Moment sind nicht dargestellt. Im zweiten Unterbereich des Betriebsbereichs der elektrischen Maschine 2 (Koordinationsstufe für Boost-und/oder Rekuperationsbetrieb) gilt somit ein zweiter Satz von (mittelfristigen) Moment- und/oder Leistungsgrenzen der elektrischen Maschine 2, bestehend aus $EMt_{max}S$ und $EMt_{min}S$. Die in der Figur 1 dargestellte Momentenkoordination durch die Ansteuervorrichtung 4 ergibt einen kontinuierlichen Übergang zwischen der Ladestrategie, dem Boostbetrieb und der Rekuperation. Eine sprungförmige Änderung im Hybridantrieb-Soll-Moment tD ergibt sprungförmige Änderungen der Signale in einer zweiten, dem Boost- und/oder Rekuperationsbetrieb zugeordneten Koordinationsstufe 24. Diese zweite Koordinationsstufe 24 gibt als "Zielwerte" die Soll-Momente tDEMS und tDES für die Antriebsmaschinen 2, 3 vor. Aus Fahrkomfortgründen sollen diese Zielwerte tDEMS und tDES gefiltert eingestellt werden, um zum Beispiel eine Anregung von Schwingungen im Antriebsstrang zu vermeiden. Maßgeblich ist hierbei das Hybridantrieb-Summen-Moment tS, Der Fahkomfortfilter 5 ermittelt dazu ein gefiltertes Summen-Soll-Moment tDF, das bei stationärem Betrieb der Summe der Ausgänge der zweiten Koordinationsstufe 24 entspricht, wobei stationär gilt:

$$tDF = tDEMS + tDES$$

Dynamisch weicht das Soll- Moment tDF von der Summe der von der zweiten Koordinationsstufe ausgegebenen Soll- Momente (tDEMS + tDES) ab. Aufgrund des ausgeprägten dynamischen Verhaltens des Verbrennungsmotors 3- der Saugrohrdynamik- wird ein speziell darauf abgestimmtes Verbrennungsmotor- Soll- Moment tLE mit entsprechenden dynamischen Verlauf vom Fahrkomfortfilter ermittelt. Im stationären Betrieb gilt:

$$tLE = tDES$$

und damit für das Verbrennungsmotor- Basis- Moment EtB (Verbrennungsmotor- Ist- Moment)

$$EtB = tLE = tDES$$

Im Ausführungsbeispiel erfolgt der Instationärausgleich des instationären Ausgleichsbetriebs, in dem die Subtrahiereinheit 15 die Differenz zwischen dem Ist-Drehmoment des Verbrennungsmotors EtB und dem gefilterten Summen-Soll-Moment tDF erzeugt. Ein Zündwinkeleingriff beim Verbrennungsmotor 3 erfolgt im betrachteten Beispiel nicht, hierfür erforderliche Maßnahmen sind in der Figur 1 nicht dargestellt. Die so gebildete dritte Koordinationsstufe 25 für den instationären Ausgleichsbetrieb weist einen eigenen Satz von (kurzfristigen) Moment- und/oder Leistungsgrenzen auf (wobei in der Figur 1 lediglich Momente betrachtet werden) bestehend aus $EMt_{max}$ und $EMt_{min}$, wobei gilt:

$$EMt_{min} \leq EMt_{min}S \leq tDEML \leq EMt_{max}S \leq EMt_{max}$$

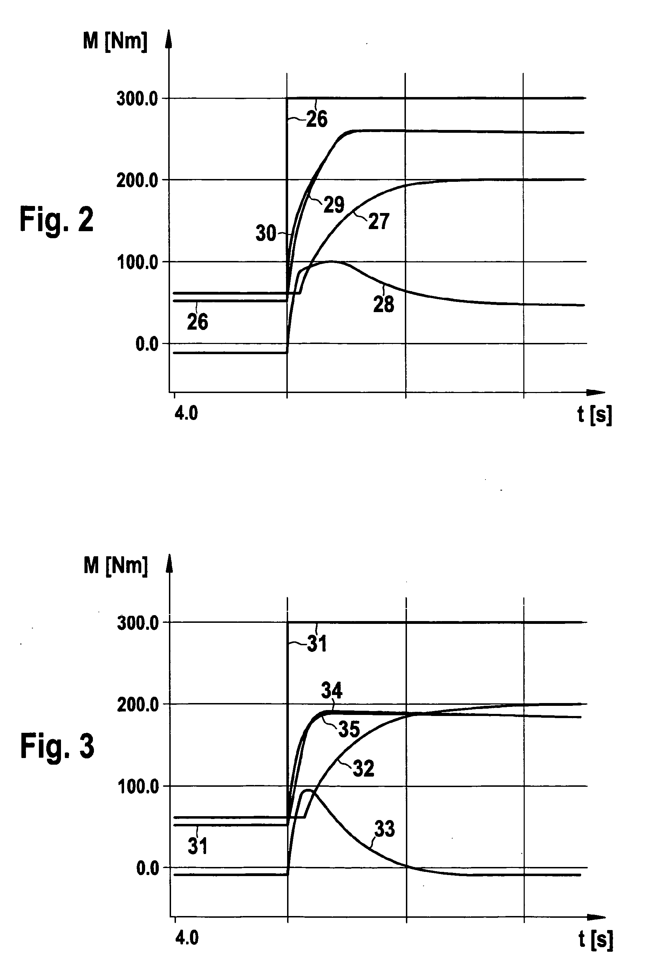

Die Figur 2 zeigt ein Diagramm, bei dem die Funktionen des Soll-Moments tDF, des Verbrennungsmotor-Ist-Moments EtB, des Elektromotor-Ist-Moments EMt und des Hybridantrieb-Gesamtmoments tS dargestellt sind, wobei auf der Abszisse die Zeit in Sekunden (s) und der Ordinate die Drehmomente in Newtonmeter (Nm) abgetragen sind. Dabei zeigt die Figur 2 einen positiven Sprung des vom Fahrer bestimmten Soll-Moments tD von 50 Nm auf 300 Nm. Die Grenzen der Koordinationsstufen liegen bei $EMt_{max}S = 50$ Nm, $EMt_{max} = 100$ Nm, das maximal mögliche Basismoment beträgt $EtB_{max} = 200$ Nm, das Soll-Moment tDEML = -10 Nm. Es wird davon ausgegangen, dass sich die Drehzahl während des Boost- und/oder Rekuperationsbetriebs nur gering ändern, und die Momentgrenzen somit konstant bleiben. Beim Soll-Moment tD = 50 Nm kann das Elektromaschinen-Soll-Moment tDEML = -10 Nm eingehalten werden, es gilt tDEMS = -10 Nm und für das Verbrennungsmotor-Soll-Moment tDES am Eingang des Fahrkomfortfilter tDES = 60 Nm. Mit dem Sprung des Soll-Moments tD auf 300 Nm erfolgt der Übergang in den Boostbetrieb. Aufgrund der genannten Momentgrenzen ergeben sich Sprünge des Elektromotor-Soll-Moments tDEMS auf 50 Nm und des Verbrennungsmotor-Soll-Moments tDES auf 200 Nm, wobei das vom Fahrkomfortfilter 5 gefilterte Summen-Soll-Moment tDF asymptotisch zur Summe dieser beiden Soll-Momente - das heißt zu einem Gesamtmoment von 250 Nm - verläuft. Das Ist-Moment des Verbrennungsmotors EtB steigt entsprechend der Saugrohrdynamik (simuliert durch Annahme einer Totzeit und dem Kurvenverlauf eines PT1-Gliedes) auf 200 Nm und nähert sich asymptotisch an das Soll-Moment (den Zielwert) tDES an. Das Elektromaschinen-Ist-Moment EMt steigt zum Instationärausgleich (kurzfristig) bis an das maximale Elektromaschinen-Ist-Moment $EMt_{max} = 100$ Nm (als Grenze) an und gleicht damit den verzögerten Aufbau des Verbrennungsmotor-Ist-Moments EtB aus, fällt dann - wie erwünscht - bis zur (mittelfristigen) Boost-Grenze $EMt_{max}S$ von 50 Nm ab. Das Summendrehmoment tS entspricht in guter Näherung dem gefilterten Summen-Soll-Moment tDF. Es wird eine hohe Dynamik erreicht. Der Sprung des Soll-Moments tD (Funktion 26) zeigt zum Zeitpunkt t = 4,5 s einen Sprung von 100 auf 300 Nm. Das resultierende Verbrennungsmotor-Basis-Moment EtB (Funktion 27) und das Elektromaschinen-Ist-Moment EMt (Funktion 28) ergänzen sich zum Hybridantrieb-Summenmoment tS (Funktion 29). Die Funktion 29 entspricht dabei im Wesentlichen dem Verlauf des gefilterten Soll-Moments tDF (Funktion 30).

Die Figur 3 zeigt einen entsprechenden Sprung des vom Fahrer vorgegebenen Soll-Moments tD (Funktion 31), allerdings bei abgeregeiiem Boost-Betrieb. Mit

$$EMt_{max}S = tDEML = - 10 \text{ Nm}$$

gilt für den dargestellten Zeitbereich: tDEMS = - 10 Nm

Das Verbrennungsmotor-Basismoment EtB (Funktion 32) entspricht der Funktion 27 des Diagramms der Figur 2. Das Elektromotor-Ist-Moment EMt (Funktion 33) steigt lediglich zum Instationärausgleich (kurzfristig) an, geht dann auf -10 Nm zurück, sodass das resultierende Hybridantrieb-Summenmoment tS (Funktion 34), das im Wesentlichen dem Soll-Moment nach der Filterung tDF (Funktion 35) entspricht, gemäß dem instationären Ausgleichsbetrieb auf 190 Nm ansteigt. Die Figur 3 zeigt damit, dass der Instationärausgleich erfindungsgemäß auch bei abgeregeltem Boost-Betrieb erfolgt.

## Patentansprüche

1.   Verfahren zum Betreiben eines Hybridantriebs (1) eines Kraftfahrzeugs, der einen Verbrennungsmotor (3), mindestens eine elektrische Maschine (2) und mindestens einen elektrischen Speicher aufweist, wobei die elektrische Maschine (2) und der elektrische Speicher einem Bordnetz des Kraftfahrzeugs angehören, wobei das Verfahren folgende Schritte umfasst:

- Unterteilung des Betriebs der elektrischen Maschine (2) in aneinandergrenzende Unterbereiche

    a) instationärer Ausgleichsbetrieb,
    b) Boost- und/oder Rekuperationsbetrieb und
    c) Bordnetz-Aufrechterhaltungsbetrieb,

<u>**gekennzeichnet durch**</u> folgende Schritte:

- Zuweisung von <u>individuellen</u> Moment- und/oder Leistungsgrenzen ($EMt_{max}S$, $EMt_{min}S$) der elektrischen Maschine (2) in mindestens zwei Unterbereichen und
- Freigabe und/oder Beeinflussung der jeweiligen Moment- und/oder Leistungsgrenzen ($EMt_{max}S$, $EMt_{min}S$) der Unterbereiche in Abhängigkeit von dem momentanen Zustand des elektrischen Speichers und/oder der elektrischen Maschine (2) und/oder des Bordnetzes.

2. Verfahren nach Anspruch 1, **dadurch gekennzeichnet, dass** der instationäre Ausgleichsbetrieb ein kurzfristiger Betrieb ist, der Boost- und/oder Bekuperationsbotrieb ein mittelfristiger Betrieb ist und der Bordnetz-Aufrechterhaltungsbetrieb ein langfristiger Betrieb ist.

3. Verfahren nach einem der vorhergehenden Ansprüche, **dadurch gekennzeichnet, dass** der kurzfristige Betrieb maximal zwei Sekunden, der mittelfristige Betrieb maximal eine Minute und der langfristige Betrieb länger als eine Minute andauert.

4. Verfahren nach einem der vorhergehenden Ansprüche, **dadurch gekennzeichnet, dass** ein Übergang der Moment- und/oder Leistungsgrenze ($EMt_{max}S$, $EMt_{min}S$) auf eine niedrigere oder höhere Moment- und/oder Leistungsgrenze ($EMt_{max}S$, $EMt_{min}S$) kontinuierlich erfolgt.

5. Verfahren nach einem der vorhergehenden Ansprüche, **dadurch gekennzeichnet, dass** mindestens ein weiterer Unterbereich vorgesehen ist, wobei der elektrischen Maschine (2) in diesem Unterbereich eine entsprechende Moment- und/oder Leistungsgrenze ($EMt_{max}S$, $EMt_{min}S$) zugewiesen wird.

6. Verfahren nach einem der vorhergehenden Ansprüche, **dadurch gekennzeichnet, dass** der weitere Unterbereich ein Externbetrieb ist, bei dem ein externer Eingriff auf den Hybridantrieb (1) erfolgt.

7. Verfahren nach einem der vorhergehenden Ansprüche, **dadurch gekennzeichnet, dass** die Reihenfolge der Freigabe und/oder der Beeinflussung der jeweiligen Moment-und/oder Leistungsgrenzen ($EMt_{max}S$, $EMt_{minn}S$) der Unterbereiche nacheinander für Unterbereiche mit immer größeren Moment- und/oder Leistungsgrenzen ($EMt_{max}S$, $EMt_{min}S$) erfolgt.

8. Verfahren nach einem der vorhergehenden Ansprüche, **dadurch gekennzeichnet, dass** die Reihenfolge der Freigabe und/oder der Beeinflussung der jeweiligen Moment-und/oder Leistungsgrenzen ($EMt_{max}S$, $EMt_{min}S$) der Unterbereiche nacheinander für Unterbereiche mit immer kürzeren Betriebszeiten erfolgt.

9. Verfahren nach einem der vorhergehenden Ansprüche, **dadurch gekennzeichnet, dass** die elektrische Maschine (2) als Generator und als elektrischer Motor des Hybridantriebs (1) genutzt wird

**Claims**

1. Method for operating a hybrid drive (1) of a motor vehicle, which hybrid drive (1) has an internal combustion engine (3), at least one electric machine (2) and at least one electric accumulator, wherein the electric machine (2) and the electric accumulator are associated with an on-board electrical system of the motor vehicle, wherein the method comprises the following steps:

- division of the operation of the electric machine (2) into adjacent sub-areas

    a) non-steady state equalizing mode,
    b) boosting and/or recuperation mode, and
    c) on-board electrical system maintenance mode,

**characterized by** the following steps:

- assignment of <u>individual</u> torque and/or power limits ($EMt_{max}S$, $EMt_{min}S$) of the electric machine (2) into at least two sub-areas, and
- enabling and/or influencing of the respective torque and/or power limits ($EMt_{max}S$, $EMt_{min}S$) of the sub-areas as a function of the instantaneous state of the electric accumulator and/or of the electric machine (2) and/or of the on-board electric system.

2. Method according to Claim 1, **characterized in that** the non-steady state equalizing mode is a short-term mode, the boosting and/or recuperating mode is a medium-term mode and the on-board electrical system maintenance mode is a long-term mode.

3. Method according to one of the preceding claims, **characterized in that** the short-term mode lasts for a maximum of two seconds, the medium-term mode lasts for a maximum of one minute and the long-term mode lasts for longer than a minute.

4. Method according to one of the preceding claims, **characterized in that** a transition from the torque and/or power limit ($EMt_{max}S$, $EMt_{min}S$) to a relatively low or relatively high torque and/or power limit ($EMt_{max}S$, $EMt_{min}S$) takes place continuously.

5. Method according to one of the preceding claims, **characterized in that** at least one further sub-area is provided, wherein a corresponding torque and/or power limit ($EMt_{max}S$, $EMt_{min}S$) is assigned to the electric machine (2) in this sub-area.

6. Method according to one of the preceding claims, **characterized in that** the further sub-area is an external mode in which an external intervention in the hybrid drive (1) takes place.

7. Method according to one of the preceding claims, **characterized in that** the sequence of enabling and/or influencing the respective torque and/or power limits ($EMt_{max}S$, $EMt_{min}S$) of the sub-areas takes place successively for sub-areas with ever greater torque and/or power limits ($EMt_{max}S$, $EMt_{min}S$) .

8. Method according to one of the preceding claims, **characterized in that** the sequence of enabling and/or influencing the respective torque and/or power limits ($EMt_{max}S$, $EMt_{min}S$) of the sub-areas takes place successively for sub-areas with ever shorter operating times.

9. Method according to one of the preceding claims, **characterized in that** the electric machine (2) is used as a generator and as an electric motor of the hybrid drive (1).

**Revendications**

1. Procédé d'entraînement d'une propulsion hybride (1) de véhicule automobile comportant un moteur à combustion interne (3), au moins un moteur électrique (2) et au moins un accumulateur électrique, le moteur électrique (2) et l'accumulateur électrique appartenant à un réseau de bord du véhicule automobile, le procédé comprenant les étapes suivantes :

division du fonctionnement du moteur électrique (2) en sous-zones connexes ;

a) mode de fonctionnement de compensation non stationnaire ;
b) mode de fonctionnement d'élan et/ou de récupération ;
c) mode de fonctionnement de maintien du réseau de bord ;

**caractérisé par** les étapes suivantes :

affectation de limites de couple et/ou de puissance ($EMt_{max}S$, $EMt_{min}S$) individuelles du moteur électrique (2) dans au moins deux sous-zones ; et
validation et/ou influencement des limites de couple et/ou de puissance ($Emt_{max}S$, $EMt_{min}S$) respectives des sous-zones en fonction de l'état momentané de l'accumulateur électrique et/ou du moteur électrique (2) et/ou du réseau de bord.

2. Procédé selon la revendication 1, **caractérisé en ce que** le mode de fonctionnement de compensation non stationnaire est un mode de fonctionnement à court terme, que le mode de fonctionnement d'élan et/ou de récupération est un mode de fonctionnement à moyen terme et que le mode de fonctionnement de maintien du réseau de bord est un mode de fonctionnement à long terme.

3. Procédé selon l'une quelconque des revendications précédentes, **caractérisé en ce que** le mode de fonctionnement à court terme dure au maximum deux secondes, que le mode de fonctionnement à moyen terme dure au maximum une minute et que le mode de fonctionnement à long terme dure plus longuement qu'une minute.

4. Procédé selon l'une quelconque des revendications précédentes, **caractérisé en ce qu'**une transition de la limite de couple et/ou de puissance ($EMt_{max}S$, $EMt_{min}S$) se produit en continu pour atteindre une limite de couple et/ou de puissance ($EMt_{max}S$, $EMt_{min}S$) inférieure ou supérieure.

5. Procédé selon l'une quelconque des revendications précédentes, **caractérisé en ce qu'**au moins une sous-zone supplémentaire est prévue, le moteur électrique (2) se voyant affecté dans cette sous-zone une limite de couple et/ou de puissance ($EMt_{max}S$. $EMt_{min}S$) correspondante.

6. Procédé selon l'une quelconque des revendications précédentes, **caractérisé en ce que** la sous-zone supplémentaire est un mode de fonctionnement extérieur dans lequel une intervention externe se produit sur la propulsion hybride (1).

7. Procédé selon l'une quelconque des revendications précédentes, **caractérisé en ce que** la séquence de validation et/ou d'influencement des limites de couple et/ou de puissance ($EMt_{max}S$, $EMt_{min}S$) des sous-zones se produit successivement pour les sous-zones avec des limites de couple et/ou de puissance ($EMt_{max}S$, $EMt_{min}S$) toujours plus importantes.

8. Procédé selon l'une quelconque des revendications précédentes, **caractérisé en ce que** la séquence de validation et/ou d'influencement des limites de couple et/ou de puissance ($EMt_{max}S$, $EMt_{min}S$) respectives des sous-zones se produit successivement pour les sous-zones avec des durées de fonctionnement toujours plus courtes.

9. Procédé selon l'une quelconque des revendications précédentes, **caractérisé en ce que** le moteur électrique (2) prend la forme du générateur et du moteur électrique de la propulsion hybride (1).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004048606 A1
- WO 9708008 A
- GB 2353984 A
- DE 102004048606